# EUROPEAN PATENT SPECIFICATION

(11) **EP 3 754 528 B1**
(45) Date of publication and mention of the grant of the patent: **04.12.2024**
(21) Application number: 20180476.2
(22) Date of filing: 17.06.2020
(51) Int. Cl.: G06F 21/57, G06F 21/73, G06F 21/60, H04L 9/40, H04W 12/0431, H04W 12/30

(54) **SECURE PROVISION OF PROGRAMMABLE DEVICES**
SICHERE BEREITSTELLUNG VON PROGRAMMIERBAREN VORRICHTUNGEN
FOURNITURE SÉCURISÉE DE DISPOSITIFS PROGRAMMABLES

(30) Priority: 21.06.2019 GB 201908938
(43) Date of publication of application: 23.12.2020
(73) Proprietor: Secure Thingz Limited, Trumpington, Cambridge CB2 9FF (GB)
(72) Inventor: BOTT, Andrew, Cambridge, Cambridgeshire CB2 9FF (GB); WOODRUFF, Timothy John, Cambridge, CB2 1RR (GB); HOOLE, Timothy, Foxton, Cambridgeshire CB22 6SU (GB)
(74) Representative: Marks & Clerk LLP

(56) References cited:
- EP-A1- 3 700 243
- US-A1- 2009 300 758
- US-A1- 2015 326 540
- US-A1- 2016 232 343
- US-A1- 2018 034 682

## Description

### BACKGROUND

A Hardware Security Module (HSM) is often used to deploy software code and cryptographic keys onto a programmable device securely (for use in a consumer device).

A Hardware Security Module is a device that can create and hold private keys and secret keys securely so that they may not be extracted. The HSM also provides the ability to perform some selected cryptographic operations with the keys.

Generally speaking HSMs are used to hold and use private keys and respond to a simple request to deliver, for example, a single key and/or a result of a cryptographic operation.

US2009300758 discloses a method and apparatus for generating provisioning data to provision a device. A provisioning bundle is validated according to a relationship between a configuration and a bundle sequence number identifying the provisioning bundle. A provisioning request includes a device hardware identifier identifying the device. An authorization for the provisioning request is determined for generating provisioning data including the provisioning bundle personalized by the device hardware identifier for the device.

US2016/232343 relates to techniques for securely booting a wireless-communication integrated circuit in an electronic device using a remote, non-secure memory.

US2015/326540 describes technologies for pre-computed data (PCD) asset generation and secure deployment of the PCD asset to a target device in an operation phase of a manufacturing lifecycle of the target device in a cryptographic manager (CM) environment. One implementation includes a Root Authority (RA) device that receives a first command to generate a unique PCD asset for a target device. In response, the RA device generates the PCD asset and packages the PCD asset for secure deployment of the PCD asset to the target device and to be used exclusively by the target device. The RA device deploys the packaged PCD asset in a CM system for identification and tracking of the target device.

US2018/034682 discloses a secure programming system and method for provisioning and programming a target payload into a programmable device mounted in a programmer. The programmable device can be authenticated before programming to verify the device is a valid device produced by a silicon vendor. The target payload can be programmed into the programmable device and linked with an authorized manufacturer. The programmable device can be verified after programming the target payload by verifying the silicon vendor and the authorized manufacturer.

### SUMMARY

Original Equipment Manufacturers (OEMs) create consumer "Products", eventually to be sold to their end customer. The products comprise a programmable device e.g. a secure elements, programmable microprocessor, or microcontroller, OEMs want to provision the programmable devices with OEM-specific information, X.509 Certificates, security keys, and other credentials. This allows the OEM to make consumer products that can be uniquely and securely authenticated across the Internet, allowing the OEM to fully trust the data supplied by the programmable device.

It is therefore advantageous for each Device to be provisioned so that it can be securely differentiated from every other Device: this is done, for example, by using state of the art cryptographic techniques such as asymmetric cryptography with a unique Private Key per Device and an associated X.509 Certificate.

The invention is defined by independent claims 1, 14 and 15. Further embodiments are defined by the dependent claims.

According to one aspect of the present disclosure there is provided a security data processing device comprising a memory and a processor, wherein the processor is coupled to the memory and is configured to: receive a record, the record comprising: a sequence element; and encrypted information; query the memory to determine a value for a sequence element parameter that is stored in the memory, wherein the sequence element and the value are elements of a sequence; validate the sequence element using the sequence element and the value, and in response to said validation: decrypt the encrypted information using a cryptographic key stored in the memory to obtain decrypted information; update the value associated with the sequence element parameter using the sequence element; and output programming information to a programming module for programming a programmable device in communication with the programming module, said programming information based on said decrypted information, wherein the programmable device and the security data processing device are separate devices.

The record may comprise encrypted content. In embodiments, the encrypted content can only be decrypted by the HSM, by using a key held by the HSM using cryptographic techniques understood by someone familiar with the art, for instance, an asymmetric private key and a derived-key decryption scheme.

When the HSM receives a record, it may be configured to validate that the sequence element is in the expected sequence (for instance it may increment).

In embodiments, the record may further comprise an identifier, wherein the sequence element is associated with the identifier; and the processor is further configured to: query the memory with said identifier to determine the value for the sequence element parameter that is stored in the memory in association with the identifier.

The HSM further may be configured to determine if it is permitted to decrypt the encrypted information in the record. The HSM may determine it is permitted to decrypt the encrypted information in the record in response to successfully validating the sequence. Once the encrypted information is decrypted, the HSM is then able to use the (decrypted) information contained in the record, for instance to provision a new programmable device. Once decrypted, the value associated with the sequence parameter stored in the HSM memory against that identifier may be updated to the next in the sequence (for instance incremented).

If the HSM stores more than one sequence element then it is advantageous if there is an identifier associated with each sequence element. This may correspond to an identifier in a received record and thereby allows the HSM to determine which sequence element the sequence element in the record refers to.

The HSM may comprise a non-volatile memory configured to store an identifier, and a sequence element parameter having a value. The HSM is used in a process of programming (i.e. provisioning) a programmable device. The HSM can be used to provide information to a programming machine. The identifier may be associated with a product and may specify, for example, a particular model of a consumer device. The identifier may identify which product the programmable device is to be associated with following being programmed, for example, the programmable device may eventually be a component part of the product. The identifier may be referred to as a product identifier.

Associated with each identifier is a sequence element parameter having a value. The value may be referred to as a sequence element value. The memory may store an identifier (having a value/identity) with an associated value, the value being the sequence element value. In this way, the identifier and its corresponding associated sequence element parameter may be regarded as a pair of values.

The HSM may store multiple sets of the above pairs of values, for example, each for: different products, different OEMs, and different models of products.

In embodiments, the HSM may validate the sequence element of the new record before permitting it to be decrypted, but refuses to decrypt it if the sequence element is not permitted next. This results in any previously-used records being prevented from being reused. Advantageously, this provides the mechanism for an anti-cloning system, to prevent devices with identical credentials being created. It has the advantage that the HSM does not need to retain details about previous records, just the sequence element. This is advantageous because the HSM can operate with a lower memory capacity.

The HSM may be configured to retain the value corresponding to the sequence parameter in non-volatile memory, so that the value is still available for access following a power cycle (i.e. power down then up). It is advantageous if nothing outside of the HSM is able to modify the value corresponding to the sequence parameter. It is further advantageous if the only way that the value corresponding to the sequence parameter can be modified is via the described method of submitting a new record.

The validation of the sequence element using the sequence element and the value may comprise: determining if a position in the sequence of the sequence element is further in the sequence than a position in the sequence of the value.

The programming information may comprise said decrypted information.

The processor may be configured to process said decrypted information to generate processed decrypted information and output processed decrypted information to the programming module.

The processor may be configured to process said decrypted information by performing one or more cryptographic operations using the decrypted information to generate said processed decrypted information.

The processor may be configured, in response to determining that the position in the sequence of the sequence element is further in the sequence than the position in the sequence of the value, to remove from the memory one or more of: any decrypted information associated with the value; and any encrypted information associated with the value.

The processor may be configured, in response to determining that the position in the sequence of the sequence element is not further in the sequence than the position in the sequence of the value, to reject said record and not decrypt said encrypted information.

The processor may be further configured to: receive, from a party associated with said record, a signed instruction to replace said value in memory with an earlier sequence element that has a position in the sequence earlier than said value; verify the signed instruction using a signing key stored in memory; in response to verifying said signed instruction, update the value associated with the sequence element parameter using the earlier sequence element.

The processor may be configured to: receive, from a party associated with said record, a signed instruction to validate a specified sequence element that has a position in the sequence that is not further in the sequence than a position in the sequence of the value; verify the signed instruction using a signing key stored in memory; in response to verifying said signed instruction: validate said specified sequence element.

The OEM may create and sign an instruction to permit re-injection of one or more old records, or reset the value corresponding to the sequence parameter to a particular value: the OEM takes responsibility to override the cloning protection here via its signature. This is advantageous because each record may comprise a certificate (or other cryptographic item, such as a key) that has been produced by a third party, for example, a Certificate Authority. The OEM may have paid for each of the certificates produced by the CA. In some circumstances (whether due to an error or done purposefully) the value corresponding to the sequence parameter may skip multiple steps in the sequence between programming one programmable device to another. For example, with a simple incrementing sequence, a first record may have a sequence element that equals 1, there may be several thousand other records in a batch of records, with each subsequent record having a sequence element incrementing by 1 (i.e. there may be 2000 records, with the sequence elements starting at 1 and ending at 2000). The first record (with a sequence element of 1) may be received by the HSM, the following record received by the HSM may (due to an error or otherwise) have a sequence element of 1000. The HSM would duly process this record (because 1000 is greater than 1) and then update the sequence parameter to equal 1000. In embodiments of the present invention, the HSM does not allow the value corresponding to the sequence parameter to be changed to a value earlier in the sequence. This would mean that the OEM loses the value of the certificates and keys contained in the intermediary records (for example in the records comprising the sequence values 2-999). However, by having in place a system where the sequence parameter can be reset (and/or merely changed) in response to receiving verifiable instructions from the OEM, then the OEM is able program devices using the interim records (e.g. records having sequence elements 2-999). Therefore, advantageously the OEM does not lose the costs associated with the certificates and keys that have been paid for and are contained in the interim records.

The sequence number may be augmented using a separate independent batch sequence number, the original plus batch making a combined sequence number which must always increment (or decrement as dependent claim, etc.). This permits the OEM only to have to store batch count for incrementing purposes, and it can start each batch sequence number from, say, one

The processor may be configured to: receive an instruction to reset the security data processing device; generate a random number in response to received said instruction; modify the cryptographic key using the random number to obtain a modified cryptographic key; and replace the cryptographic key with the modified cryptographic key in the memory.

In exceptional circumstances, the HSM may undergo a full reset in which all its memories are re-initialised, thus losing the identities and sequence parameters stored in memory. To prevent cloning under these circumstances (i.e. by reintroducing previously-used records), the HSM may have some special functionality on full reset: it can use a random number generator to produce and store a new random number, and this random number is used to modify the decryption key and thereby obtain a new key. The new key may therefore be marked as different. Although the value corresponding to the sequence parameter may have been zeroed following the reset (i.e. the sequence parameter is set to the zeroth element in the sequence), it is still not possible to load previously-used records. This is because the encrypted information in the previously used records were encrypted with the previous, different key. Therefore, the new, modified key is unable to decrypt the encrypted information found in the previously used records. Following the reset, the OEM has to be asked to re-encrypt the encrypted information in the records for the new HSM encryption key. This advantageously, prevents the Factory from creating clones (without the OEM's connivance) by merely performing a full Reset.

The sequence element may comprise one or more of: a number; a letter; and a non-alphanumeric character.

The identifier may identify a type of programmable device to be programmed by the programming module.

The identifier may identify a product associated with the programmable device.

The memory may be non-volatile memory.

The sequence may be a series of ascending numbers, and said validation may comprise determining if the sequence element is greater than the value. The sequence element in the record may be increased by one or more for each new record: this permits gaps in the sequence to be accommodated. Subsequent sequence elements cannot regress, but must continue on from the latest sequence value.

The sequence may be a series of descending numbers, and said validation may comprise determining if the sequence element is less than the value. In other words, the sequence element may be decremented rather than incremented as it progresses through the sequence.

The sequence element may be a hashed value, and the value for the sequence element parameter may be an unhashed value, the processor may be configured to hash the value for the sequence element parameter and validate the sequence element using the sequence element and the hashed value for the sequence element parameter.

The sequence may follow an algorithm that does not increment (or decrement) between each sequence element. Therefore, when analysing a number of sequence elements in such a sequence, it may not be clear what the sequence is. This advantageously may obscure the sequence from interceptors.

An HSM may have a unique identity.

The record further may comprise a security data processing device identifier that identifies a security data processing device configured to receive the record from the programming module and the processor may further be configured to: validate the sequence element in response to determining that the security data processing device identifier matches a security data processing device identifier stored in the memory. In embodiments, in addition to validating the sequence, the HSM may further determine if the HSM identifier in the record corresponds to a HSM identifier stored in the HSM memory, and only decrypt the encrypted information if the HSM identifier in the record corresponds to the HSM identifier stored in the HSM memory.

The sequence element may comprise a batch number and a device number, wherein the batch number corresponds to a batch of programmable devices to be programmed and the device number corresponds to a single device in the batch of programmable devices.

The sequence element may be obscured by using a hashing function based on an underlying sequence number that follows a simpler sequence. This may benefit an OEM by obscuring product volumes information. For example, rather than the HSM receiving a batch of records comprising records with sequence elements of 11, 12 and 13 respectively, the HSM may receive records comprising records with sequence elements of the hash of 11, 12 and 13 respectively, which may be referred to as X, Y and Z. To an interceptor intercepting these three records, the interceptor would merely see X, Y, and Z. Advantageously, because X, Y and Z are the hashed values of 11, 12, and 13, the interceptor would find no information that could be used to determine the underlying sequence (i.e. increase by one) because X, Y, and Z would be seemingly random unrelated numbers/letters because they are the output of a hash function. Additionally, the interceptor would not be able to determine the volume of the records, in other words, if the interceptor saw the unhashed sequence elements 11, 12, and 13, the interceptor may be able to estimate that approximately 10 devices have been programmed thus far (because the sequence element is now on 11). Similarly, if the interceptor intercepted sequence elements of 1001, 1002, and 1003, the interceptor may determine that 1000 programmable devices have been programmed. By hashing the sequence elements, the interceptor is unable to obtain such information.

The sequence element may comprise said batch number appended by said device number.

The record may further be signed and the processor is further configured to verify the signature using a signature verification key stored in memory.

The OEM may individually sign a record with its own secret asymmetric key. The public key is securely given to the HSM. This results in a record being self-contained for cryptographic purposes and thus saving the HSM from having to load large amounts of data to check signatures. For example, if the OEM signed a file comprising a batch of 100,000 records then the HSM would have to load all 100,000 records in order to verify the signature of the batch of records. However, if the OEM signs each record individually then the HSM can load a single record, verify the single record, process the record, remove the record and then load the next record. Advantageously this means that by verifying a single record, the HSM can operate more efficiently because less processing power and memory is required compared to if the HSM had to load 100,000 records. In other words, the OEM may include in the record a unique sequence number (for instance starting from 1 or some other value and incrementing), and a corresponding identifier that are signed in a way that only someone with the OEM signing key can do this.

The record may be received from the programming module. The HSM may receive a record from the programming machine. The HSM may receive a record from the party that create the record, in embodiments this means that the HSM receives the record from the HSM. The HSM may receive multiple records in a single transmission.

According to another aspect of the present disclosure there is provided a computer implemented method, the method implemented on a security data processing device, and comprising: receiving a record, the record comprising: a sequence element; and encrypted information; querying the memory to determine a value for a sequence element parameter that is stored in the memory, wherein the sequence element and the value are elements of a sequence; validating the sequence element using the sequence element and the value, and in response to said validation: decrypting the encrypted information using a cryptographic key stored in the memory to obtain decrypted information; updating the value associated with the sequence element parameter using the sequence element; and outputting programming information to a programming module for programming a programmable device in communication with the programming module, said programming information based on said decrypted information.

According to another aspect of the present disclosure there is provided a computer-readable storage medium comprising instructions which, when executed by a processor of a security data processing device cause the security data processing device to receive a record, the record comprising: a sequence element; and encrypted information; query the memory to determine a value for a sequence element parameter that is stored in the memory, wherein the sequence element and the value are elements of a sequence; validate the sequence element using the sequence element and the value, and in response to said validation: decrypt the encrypted information using a cryptographic key stored in the memory to obtain decrypted information; update the value associated with the sequence element parameter using the sequence element; and output programming information to a programming module for programming a programmable device in communication with the programming module, said programming information based on said decrypted information.

The instructions may be provided on a carrier such as a disk, CD- or DVD-ROM, programmed memory such as read-only memory (Firmware), or on a data carrier such as an optical or electrical signal carrier. Code (and/or data) to implement embodiments of the present disclosure may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language.

These and other aspects will be apparent from the embodiments described in the following. The scope of the present disclosure is not intended to be limited by this summary nor to implementations that necessarily solve any or all of the disadvantages noted.

### BRIEF DESCRIPTION OF DRAWINGS

For a better understanding of the present disclosure and to show how embodiments may be put into effect, reference is made to the accompanying drawings in which:
Figure 1 shows a programming system;
Figure 2 shows a security data processing device;
Figure 3 shows a schematic block diagram of a record; and
Figure 4 is a flow chart of a process performed by the security data processing device for programming a programmable device in accordance with embodiments described herein.

### DETAILED DESCRIPTION

A Hardware Security Module (HSM), which may otherwise be referred to herein as a security data processing device, is usually located in a Factory and is used to provision programmable devices during manufacture of new loT products. The HSM may also be located, for instance, in smaller scale operations than a Factory, for instance in a development laboratory, and used for small batches or initial prototypes. An OEM prepares per-device credentials in a data package referred to herein as a "record" using a sequence element, and the Factory is prevented from using records out of sequence, hence preventing accidental or intentional creation of cloned devices bearing the same credentials. The sequence element may be referred to as a sequence number. The sequence element may comprise; numbers, and/or letters; and/or any other character. In other words, the OEM creates or obtains multiple per-device credentials in its own facility or a safe room. The OEM may obtain the multiple per-device credentials from a commercial Certificate Authority, or from its own Certificate Authority or using a standard HSM. The OEM individually prepares per-device records (i.e. each record can only be used once, explained in more detail below), where the secret information or confidential items in the record are encrypted using a particular HSM wrapping key so that the secrets can only be unwrapped on that particular HSM, such a key is the key pair to a cryptographic key stored in the HSM memory.

Generally, the specialized HSM receives an individual record for provisioning of each programmable device. The HSM validates that the record has been signed by the OEM, and unwraps any encrypted information contained in the record as only the HSM has the unwrapping key. The HSM validates that the sequence number in the record has not been used before by comparing it with its own sequence count, for instance that it is bigger than the last sequence number used. If validation fails, the HSM refuses to use the credentials in the record for provisioning of the device. If the validation succeeds it uses the record credentials, unwrapping secrets as required, to provision the programmable device.

Advantageously, as the sequence number cannot be re-used, the OEM is protected against the factory accidentally, or purposefully, using credentials for one device more than one times.

The overall authority for providing the credentials belongs to the OEM, not to the Factory, so, advantageously, the OEM does not even need to have to trust the Factory to keep its secrets, because the Factory cannot use each credential more than once on the chosen product.

The Factory may return the sequence number (and batch sequence number if used) of each device it has provisioned in separate production records that may be signed by the HSM to prove that a particular record has been used.

Embodiments of the invention provide the OEM with the ability to securely provide a third-party Factory (that is contracted to manufacture its products) with individual per-device credentials, with the knowledge that the Factory is unable to clone extra devices. Such advantages are possible because the Factory is unable to re-use the OEM's per-device credentials without explicit OEM authorisation.

In embodiments, the OEM creates individual "records" for each programmable device, which it signs, which may include encrypted content. The record comprises a unique sequence element as well as optionally comprising the product identifier and the HSM identity. In this regard, the information comprised in a record may only be used to program a programmable device once. Therefore, although there is no requirement that requires a record's information to be programmed onto a particular programmable device, there is a requirement that information in a record may only be programmed onto only one programmable device. In other words, one record cannot be used to program multiple programmable devices. For example, if there are two records, A and B, and two programmable devices i and ii, then record A may be used to program programmable devices i or ii. Record A cannot be used to program programmable devices i and ii. Similarly, record B may be used to program programmable devices i or ii. Record B cannot be used to program programmable devices i and ii.

Embodiments will now be described by way of example only.

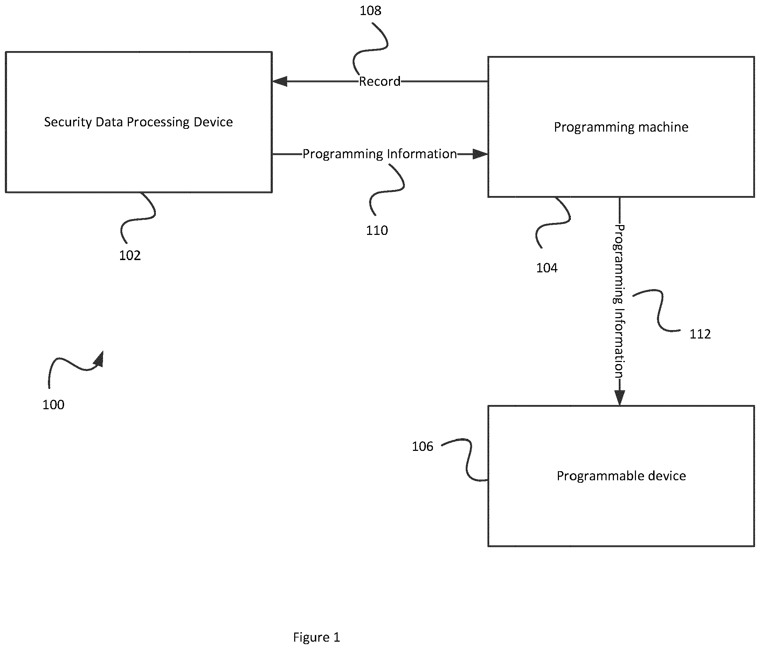

Figure 1 shows system 100 comprising a security data processing device 102, a programming machine 104 and a programmable device 106. Whilst Figure 1 illustrates the security data processing device 102 as being a standalone device, in alternative embodiments the security data processing device 102 may be a component within the programing machine 104.

As shown in Figure 1, the security data processing device 102 is configured to receive a record 108. Whilst the security data processing device 102 may receive the record 108 from the programming machine 104 (as shown in Figure 1), alternatively the security data processing device 102 may instead receive the record 108 from another machine, or other party, other than the programming machine 104. For example, the record 108 may be input onto the security data processing device 102 directly by a user in a factory that the security data processing device 102 is situated in.

The record 108 may contain a request for programming information. Alternatively, the step of the security data processing device 102 receiving the record 108 may in itself be regarded as a request for programming information 110. The programming machine 104 requires programming information 112 to program onto and/or provision a programmable device 106. The programming information 110 comprises per device credentials. The programming information 112 may correspond to programming information 110. Alternatively, the programming machine may process the programming information 110 and then program the processed programming information onto the programmable device. Alternatively, the programming information 112 may be a processed form of programming information 110, in other words, the programming information 112 may be derived from the programming information 110.

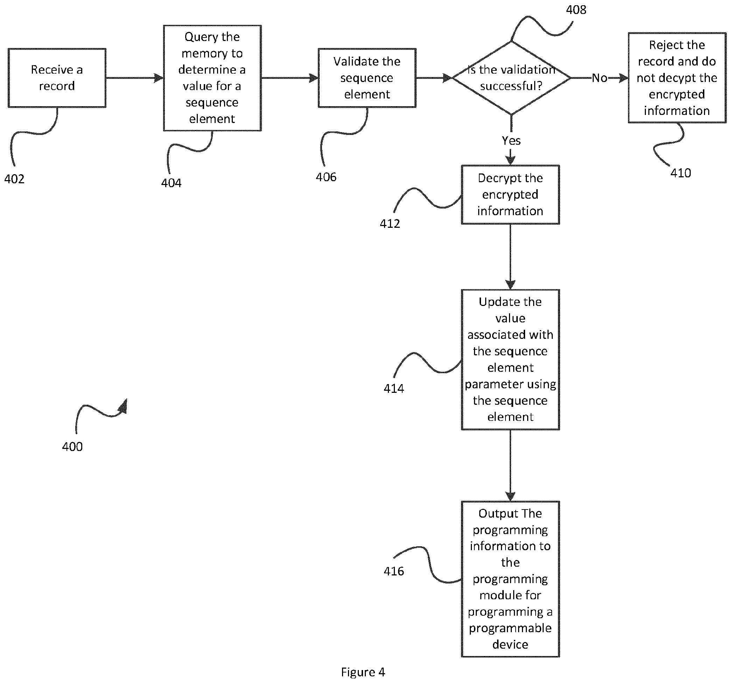

In response to receiving the record 108, the security data processing device 102 performs a number of steps of processing the record 108. These steps are described in more detail later with reference to Figure 4. However, in response to receiving and processing a valid record 108, the security data processing device 102 transmits the programming information 110 to the programming machine 104. As stated above the programming information 110 is programmed onto the programmable device 106 by the programming machine 104. It can be seen in Figure 1 that the programming machine 104 programs (i.e. provisions) the programming device 106.

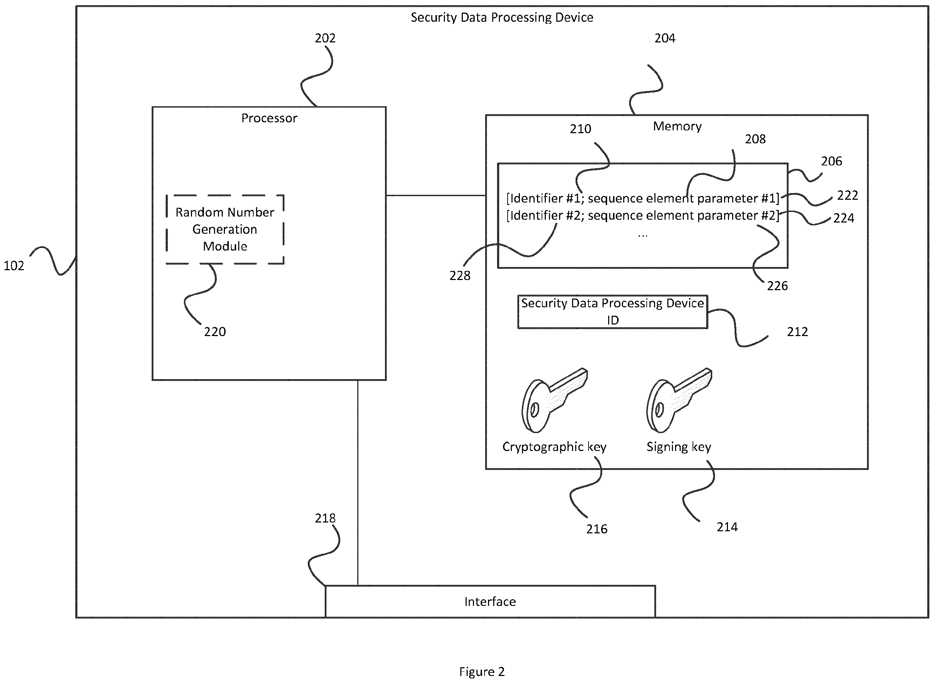

Figure 2 illustrates a schematic block diagram of the security data processing device 102. The security data processing device 102 comprises a processor 202, a memory 204 and an interface 218. The processor 202 is coupled to the memory 204, and is further coupled to the interface 218. The interface 218 may be a wired or wireless interface. The interface 218 enables the security data processing device 102 to receive the record 108 and output programming information to the programming machine 104. It will be appreciated that the same or different interfaces may be used for the reception/transmission of the record 108 and programming information. The processor 202 is configured to perform the steps detailed in the flow diagram as shown in Figure 4.

The processor 202 may comprise a random number generation module 220 which is configured to generate one or more random numbers. Alternatively the random number generation module 220 may be external to the processor 202 but nevertheless on the security data processing device 102 such that the random number generation module 220 is in communication with the processor. Alternatively, the random number generation module 220 may be situated on an external device and the processor 202 may receive a random number from such an external device via the interface 218.

The memory 204 maybe a non-volatile memory and comprises sequence memory block 206. The sequence memory block 206 stores one or more sequence entries. Figure 2 shows an example where the sequence memory block 206 stores 2 sequence entries, a first sequence entry 222 and second sequence entry 224. The first sequence entry 222 comprises a first identifier 210 and a first sequence element parameter 208, where the first identifier 210 is associated with and/or corresponds to the first sequence element parameter 208. Similarly, the second sequence entry 224 comprises a second identifier 228 and a second sequence element parameter 226, where the second identifier 228 is associated with and/or corresponds to the second sequence element parameter 226. Whilst Figure 2 illustrates that the sequence memory block 206 is capable of storing multiple sequence entries, in embodiments the sequence memory block 206 may store a single sequence entry. If there is only a single sequence entry stored in the memory block 206, then the identifier 210 may be omitted because there is no need to distinguish between different sequences.

Figure 2 shows the sequence element parameter 208 without an associated value. However, in embodiments, the sequence memory block 206 may store the sequence element parameter 208 alongside an associated value or alternatively may only store a value which the processor is configured to read as the value associated with the sequence element parameter. Similarly, the first identifier 210 may be stored as a label or parameter with an associated value for the identifier, alternatively the memory may store merely a value. In other words, the first sequence entry 222 may be stored as an array of two numbers that the processor 202 is configured to read as an identifier with an associated sequence element value.

Each of the identifiers 210 and 228 are associated with different programming operations. For example, the first identifier 210 may be associated with a first type of product whereas the second identifier 228 may be associated with a different second type of product. In this way, the security data processing device 102 is able to efficiently store information required to program many different types of products. The security data processing device 102 is able to efficiently store historical data relating to previous programming operations for a particular device by storing the identifier 210 and the sequence element parameter 208, rather than storing an entire catalogue of previously provisioned programming information for a type of device.

The memory 204 may additionally store a security data processing device identifier 212. The security data processing device identifier 212 is a unique identifier that uniquely identifies the security data processing device 102 and can be used to distinguish the security data processing device 102 from other security data processing devices (e.g. that may be located in the same Factory as the security data processing device 102). The use of such a security data processing device identifier 212 enables more efficient routing of information to security data processing devices, as well as providing more security.

The memory 204 stores a cryptographic key 216. The cryptographic key 216 is used to decrypt encrypted information found in a received record 108. The cryptographic key 216 used by the OEM producing the record, or a party producing a record on behalf of the OEM may be a symmetric key in which case the security data processing device 112 is provided with a corresponding symmetric key 216. Alternatively the cryptographic key used to encrypt information in the record may be a public key of a key pair with the private key 216 of the key pair being stored on the security data processing device 112. It may be the case that only the security data processing device 102 comprises the cryptographic key 216. In such an embodiment this means that the party encrypting information in the record can guarantee that only the intended security data processing device i.e. security data processing device 102 is able to decrypt the information because only the intended security data processing device 102 comprises the necessary (decryption) cryptographic key 216.

The memory 204 may additionally store a signing key 214. The signing key 214 is used to verify a cryptographic signature of a received record 108. The signing key 214 may be a public key of a signing key pair. The corresponding private signing key (i.e. the key that was used to sign the record) is held by, for example, the OEM and is kept secret. By verifying the cryptographic signature on a record 108 by using the signing key 214, the security data processing device 102 is able to verify the authenticity and validity of a received record. This is in addition to the level of verification and security provided by successfully decrypting any encrypted information found in a record by using the cryptographic key 216, because if a security data processing device 102 attempts to decrypt any information in a record that was not intended to be sent to such a security data processing device 102, then the decryption will fail and the result of any such attempted decryption will merely be unintelligible information.

Although multiple signing keys are not shown in figure 2, in embodiments, the memory 204 may store more than one signing key. In such embodiments, each signing key may correspond to a different OEM. Advantageously, this provides the security data processing data with the ability to provide programming information for multiple programmable devices corresponding to multiple OEMs.

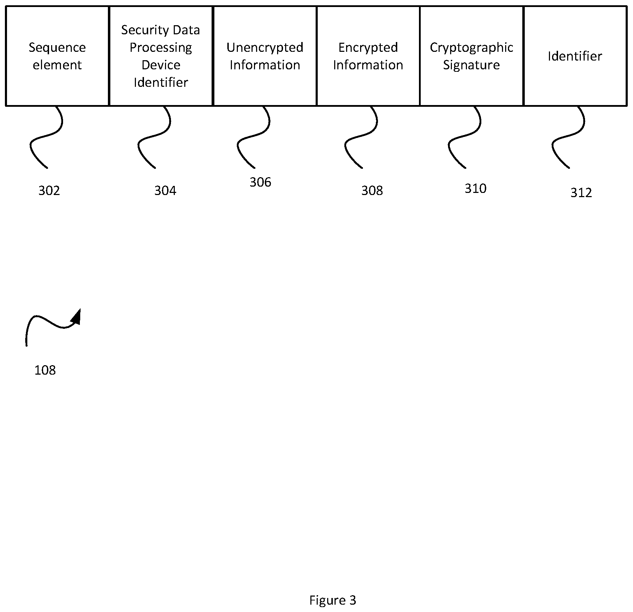

Figure 3 shows an example record 108.

The record 108 comprises a sequence element 302 which may comprise one or more of: letters; numbers; and other characters. The sequence element is an element of a sequence. In some embodiments, the sequence element 302 is the output of a sequence element fed into a hashing function. In other embodiments, the sequence element 302 is in the clear e.g. in plain text or a number.

In embodiments where the sequence element 302 in a record is a hashed value, the value for the sequence element parameter may be stored in memory 204 as an unhashed value (i.e. a value 'in the clear').

Generally speaking, if the sequence element 302 in the record is a hashed value, the processor is configured to retrieve the value for the sequence element parameter and hash the value for the sequence element parameter. The processor then compares the hashed value for the sequence element parameter with the sequence element. If this matches, then the processor is configured to reject the record because the sequence element is not further in the sequence than the value for the sequence element parameter. If this does not match, the processor is configured to hash one or more elements of the sequence that follow the value for the sequence element parameter in the sequence. The processor is then configured to compare the hash of the one or more elements of the sequence that follow the value for the sequence element parameter, to the sequence element 302 in the record. If the sequence element matches one of the one or more elements of the sequence that follow the value for the sequence element parameter then the processor accepts the record and updates the value for the sequence element parameter accordingly. If none of the one or more elements of the sequence that follow the value for the sequence element parameter match the sequence element then the processor rejects the record.

For example, the processor may be configured with a hash algorithm mechanism, however the value for the sequence element parameter that is stored in memory is in the clear rather than a hash of the value for the sequence element parameter. The processor is configured to execute the hashing algorithm to verify the sequence element when needed. The OEM generates the sequence elements for records by using the sequence (which may be with a simple incrementing sequence number) and then hashing the elements of the sequence using the same hash algorithm that the processor of the security data processing device is configured to perform. The hashed value is then input onto the record rather than the unhashed element of the sequence.

For example: the sequence may be a simple incrementing sequence: .. 1000, 1001, 1002, 1003,... The hashing function may take the first 8 hexadecimal digits of the hash SHA-2 of the sequence numbers .. 1000, 1001, 1002, 1003,...:
SHA256(1000)=> 2037d69d
SHA256(1001)=> d4e96123
SHA256(1002)=> dbe51a4e
SHA256(1003)=> db832702
SHA256(1004)=> 1894805e

The hashed values are therefore.. 2037d69d, d4e96123, dbe51a4e, db832702, 1894805e, ...These hashed values are then used as sequence elements for inputting onto records. As both the OEM and the security data processing device can obtain the elements of the sequence (i.e. .. 1000, 1001, 1002, 1003,...) and can calculate the hash value of the elements of the sequence value, the OEM can generate the next hash value, and the security data processing device can calculate the expected next hash value (for comparison with the value for the sequence element parameter).

If there is a gap in the sequence, the security data processing device can determine there is a gap and attempt to run ahead and calculate hashed values for elements in the sequence for the next increments (up to a value to be set in the algorithm). If the value for the sequence element parameter is 1000, and the security data processing device receives a record having a sequence element of db832702 (which corresponds to 1003), then the processor is configured to hash the next expected element in the sequence, i.e. 1001 (the hash of 1001=d4e96123). However, the processor is configured to determine that the expected hash value (d4e96123) does not match the sequence element (db832702). In this scenario, the processor then hashes 1002 to obtain dbe51a4e, and checks whether this matches the sequence element (db832702). This continues until the processor hashes 1003 and determines that this corresponds to the sequence element db832702. The processor determines that there is a jump in the sequence element, resulting in 1001 and 1002 being missed, so the processor sets the value for the sequence element parameter to 1003 and accepts the record.

If an earlier record is attempted, the security device looks ahead and finds there are no hash values over the next say 100,000 increments, the processor then determines that the record may be a repeat and refuses it.

The record 108 may also comprise an identifier 312. The record 108 may comprise an identifier 312 in embodiments where there is more than a single sequence entry stored in the memory block 206. In such embodiments, the processor is configured to query the memory block 206 with the identifier to determine the sequence entry that is associated with the identifier 312. The sequence element 302 is associated with the identifier 312 and the identifier 312 is processed by the processor 202 to determine which sequence the sequence element 302 refers to (and/or is part of). Similarly to sequence element 302, the identifier 312 may comprise one or more of: one or more letters; one or more numbers; and one or more of any other character or symbol. The identifier 312 may be a product identifier, for example, refer to a model of a particular product that the record corresponds to (e.g. a model number of a vacuum cleaner).

Optionally, the record 108 may comprise a security data processing device identifier 304. The security data processing device identifier 304 corresponds to the security data processing device identifier 212 in Figure 2 and can be used by, for example, a routing machine located in a Factory to route the record 108 efficiently and quickly to the intended security data processing device 102. This may be particularly advantageous in a factory comprising many security data processing devices, where many records are being processed each day. However in a factory that comprises a single or a few security data processing devices, the security data processing device identifier 304 may not be as advantageous (compared to a factory with many security data processing devices) because the routing may be done manually. In the case where there is only a single security data processing device the routing merely requires the sending of the record 108 to the single security data processing device in the factory.

The record 108 comprises encrypted information 308. The encrypted information 308 is information that OEM and/or the creator of the record 108 deems sensitive information that they would not want an interceptor to intercept and determine. Examples of such encrypted information are cryptographic keys, cryptographic certificates, source code for a device or other sensitive information. Encrypted information 308 is encrypted using a key or a derived key using a public key of a public/private asymmetric key pair. The encrypted information 308 may only be decrypted on the intended security data processing device(s), where the key used to decrypt the encrypted information 308 is shown as the cryptographic key 216. Therefore, by using the encryption key of the key pair, the OEM can assure that the intended security data processing device 102 (with the corresponding private key, for example the cryptographic key 216) is able to decrypt any encrypted information and that an interceptor is unable to decrypt the encrypted information.

The record 108 may additionally comprise unencrypted information 306. The unencrypted information 306 may be information that is eventually programmed onto a programmable device 106 and/or may be instructions to the security data processing device 102 on how to provision the programmable device 106. The unencrypted information 306 may refer to other operations such as instructions for cryptographic operations to be performed by the processor 202. In any event, the unencrypted information 306 is information that is not particularly confidential or secret to the OEM because the OEM has sent such unencrypted information 306 in the clear and therefore is aware of the risks and is accepting of the possibility of the unencrypted information 306 being intercepted by an interceptor.

The record 108 may additionally comprise a cryptographic signature 310 that is the digital signature of some or all of the information comprised in the record 108. The cryptographic signature 310 is the result of the OEM signing the record with an OEM signing key. The processor 202 of the security data processing device 102 is able to verify the cryptographic signature 310 by utilising the signing key 214 stored in the memory of 204. Such a verification of a cryptographic signature 301 is a further level of security validation that results in only the intended security data processing device 102 processing the record 108 that is intended for such a security data processing device 102. The memory 204 may store multiple signing keys, where each signing key is used to, for example, validate signatures from different OEMs, where each OEM uses a different key to sign records. A single OEM may use different keys to sign records associated with different products, therefore, the memory 204 may store multiple signing keys (used to validate signatures) that correspond to different products (but correspond to a single OEM).

Figure 4 shows a flow diagram of an example process 400 carried out by the processor 202 of the security data processing device 102.

The process 400 begins at step 402 where the processor 202 receives a record 108. The record may be received from a programming module in the programming machine 104 or may be received from elsewhere, such as directly from OEM or other party. The act of receiving a record may in itself be a request for some programming information from the security data processing device 102. Additionally or alternatively, an instruction that equates to a request for program information may be appended to the record 108, or may be contained in the record, or may be sent in a separate communication to the transmission of the record 108. The security data processing device 102 receives a record, irrespective of the exact nature of the request for program information.

In response to the processor receiving the record at step 402 the processor 202 is configured to perform a number of operations.

At step 404, the processor 202 queries the sequence memory block 206 of the memory 204 312 to determine the value for a sequence element parameter stored in the sequence memory block 206.

In some embodiment, the sequence memory block 206 may comprise multiple sequence entries such as sequence entry 222 and sequence entry 224, in these embodiments an identifier 312 is used to determine the correct sequence entry for validating the record 108. In these embodiments, the processor 202 reads the identifier 312 from the received record 108 and queries the sequence memory block 206 of the memory 204 with the identifier 312 to determine the value for a sequence element parameter stored in the sequence memory block 206 in association with the identifier 312.

At step 406, the processor 202 validates the sequence element 302 of the received record 108 using the sequence element 302 of the received record 108 and the sequence element parameter stored in the sequence memory block 206 (that may, in embodiments be in association with the identifier 312 if an identifier 312 is present). The processor 202 may perform the validation of the sequence element at step 406 in a number of different ways in dependence on the underlying sequence that the sequence element 302 of the received record 108 is part of. However, generally speaking, the processor validates the sequence element by determining if the sequence element 302 (i.e. the sequence element in the received record 108) is later in a sequence than the value corresponding to the sequence element parameter e.g. 208. The processor therefore may be configured to determine the element in the sequence following the sequence element parameter 208 and determine if the sequence element 302 matches such a following element. However, in some embodiments the received sequence element 302 may not be the element in the sequence directly following the value corresponding to the sequence element parameter 208 but rather may be multiple steps in the sequence beyond that of the value for the sequence element parameter 208.

As an example, the sequence may be a sequence of numbers in ascending order incrementing by 1 and the sequence element parameter 208 may have a value of 5, the identifier 210 may have a value of 'product A'. If the identifier 312 in the received record 108 has a value of 'product A' then the processor, after querying the memory with the identifier 312, will determine that the sequence entry 222 is the relevant sequence entry for the received record because the identifier 312 in the record corresponds to the identifier 210 (rather than say, for example, the identifier 228 which in this example has a value of 'product B'). Once determining that the sequence entry 222 is the relevant sequence entry for the received record 108, the processor determines that the value corresponding to the sequence element parameter 208 is equal to 5. If for example the sequence element 302 in the received record 108 has a value at 6, then the processor determines that the received sequence element 302 has a value that corresponds to an element that is further in the sequence than the value for the sequence element parameter, in other words the processor determines that 6 is a later element in the series of ascending numbers than 5. In this example, the processor may be able to determine that the received sequence element 302 is later in the sequence than the value of the sequence element parameter 208 by performing the calculation such as merely determining that the sequence element 302 is greater than the value of the sequence element parameter 208 because the sequence is merely a simple incrementation of 1.

In other examples, the sequence may be a different function rather than incrementing and maybe for example be a decrementing sequence, a linear sequence, or a non-linear sequence. A sequence may be linear and increasing (or decreasing), for example, a linear sequence may be a sequence that increases by 2 each step (i.e. 2, 4, 6, 8). A non-linear sequence may be a sequence that follows a non-linear function (with increasing or decreasing values), for example a quadratic function. For example, a non-linear sequence may be a sequence of increasing square numbers: 1, 4, 9, 16.... A further example may be an exponential function (with increasing or decreasing values). In the case of a non-linear sequence, the processor may be configured to determine one or more sequence elements following and/or preceding the value for the sequence element parameter 208, and then further determine whether the sequence element 302 is later or earlier in the sequence than the value for the sequence element parameter 208.

Regardless of the exact sequence that is used, at step 408 the processor 102 determines if the validation performed in step 406 is successful.

At step 410, if the validation is not successful then the processor 202 rejects the record 108 and does not decrypt any information contained in the record 108. The processor may be configured in this scenario to perform further steps such as store information in the memory 204 indicating that an unsuccessful request for programming information has been received. In other examples, in response to determining that the validation is not successful, the processor may transmit a message to, for example, the OEM or the programming machine, informing such a party or device that the validation has not been successful. Advantageously if the processor is configured to send a message to OEM in response to determining unsuccessful validation, then the OEM may be aware that the factory is attempting to maliciously create a clone device. This may be advantageous because it enables OEM to take action against such a factory. If the processor is configured to output the indication to the factory that the validation has been unsuccessful, then in the case of a non-malicious attempt to program a programmable device, this may be advantageous for the factory because the validation data may have been unsuccessful due to a programming error, or routing error rather than a malicious attempt to create clone devices. This is advantageous for the factory because it allows them to be aware of any programming or routing errors in the early stage of the programming proceedings.

If the validation is successful then the process 400 proceeds to step 412 where the processor decrypts any encrypted information found in the record 108.

The decrypted information may eventually be output directly to the programming machine for input onto a program device 106. Additionally or alternatively, the decrypted information may be processed by the processor. For example, used in cryptographic operations such as the creation of keys and/or certificates and any subsequent processed information may then be transmitted to the program machine for programming onto a programmable device 106. Additionally or alternatively, the decrypted information, rather than being for example cryptographic keys to be used in a cryptographic operation, may rather be instructions for execution by the processor. Such instructions may be to create a key or to sign a certificate. Other forms of encrypted information may be source code or other sensitive information that the OEM would not want interceptor to be able to read in the clear.

The loading of a subsequent record, following the decryption, on the HSM may have the effect of destroying the previous information, keys and credentials and replacing the information and keys with the new ones from the new record. The next programmable device may then be provisioned using the new credentials. Advantageously, this saves memory space in the HSM. Further advantageously, this prevents accidental availability of previous records and thus limits the information available to an interceptor.

At step 414, the processor updates the value associated with the sequence element parameter 208 to the value of the sequence element 302. The processor may further be configured to remove any other information stored in the memory referring to the previous value associated with the sequence element parameter i.e. any information associated with the value. This advantageously frees up space in the memory of the security data processing device 102, and further prevents availability of previous records thus enhancing security against an malicious party.

At step 416, the processor transmits any programming information to the programming machine, e.g. the programming module on the programming machine, for programming a programmable device. As discussed, such programming information may be directly or indirectly obtained from information contained in the record 108. More specifically, such programming information may be directly or indirectly obtained from information that has been decrypted.

In some embodiments, the programming information may comprise no information obtained directly or indirectly from information found in the record 108. Rather, the programming information created by the processor may comprise keys (or other information) generated by the processor 202. In such an example, the record 108 may comprise instructions to the processor 108 to generate such information.

Step 414 and step 416 may be performed in an interchangeable order and/or maybe performed simultaneously.

The end result of process 400 leaves the security data processing device 102 in a broadly equivalent state to the state that the security data processing device 102 was prior to the start of process 400. In this sense, the process 400 is a cyclical process, whereby the security data processing device 102 has a memory 204 comprising one or more sequence entries. The processor 202 then receives a record and determines if the record is valid, and if it is valid, performs a number of operations such as decrypting on the record before outputting programming information to a programmed machine. The processor then updates the sequence entry that was used to validate the received record 108.

Advantageously, an OEM that wants to use an external Certificate Authority (CA) to provide its device certificates (or other confidential information) can securely provide per-device records to a factory and be sure that the factory is unable to use the confidential information to create cloned devices. This increases the efficiency of securing the manufacturing processing flow for the Internet of Things devices. Further advantageously, embodiments of the present invention enable end customers to rely on the security and authenticity of programmable devices they purchase, and further advantageously gives confidence to the customer that the programmable device is not from the 'grey' market of lower quality and cloned devices with inferior support.

An advantage of embodiments of the invention is that the OEM can release per-device credentials to a Factory in the knowledge that they can each only be used once to create a single device. Additionally, if the OEM is using an external CA, and has paid for each credential, then the OEM can demonstrate to the CA that the OEM can only use each credential once.

If the sequence elements are used out of sequence there will be gaps in the sequence. The factory databases will enable the OEM to know about gaps, and the paid-for items can be re-processed with later sequence elements so that they can be used (but only by the OEM as signature is needed). The previous records from within the gap cannot be used by the Factory at all because the value corresponding to the sequence parameter stored in the HSM has progressed past the sequence element contained in the previous record.

Generally, any of the functions described herein can be implemented using software, firmware, hardware (e.g., fixed logic circuitry), or a combination of these implementations. The term "module" as used herein generally represents software, firmware, hardware, or a combination thereof. In the case of a software implementation, the module represents program code that performs specified tasks when executed on a processor (e.g. CPU or CPUs). The program code can be stored in one or more computer readable memory devices. The features of the techniques described below are platform-independent, meaning that the techniques may be implemented on a variety of commercial computing platforms having a variety of processors.

While the present disclosure has been particularly shown and described with reference to preferred embodiments, it will be understood to those skilled in the art that various changes in form and detail may be made without departing from the scope of the present disclosure as defined by the appendant claims.

## Claims

1. A security data processing device (102) comprising a memory (204) and a processor (202), wherein the processor is coupled to the memory and is configured to:
receive (402) a record (108), the record comprising: a sequence element (302) and encrypted information (308);
query (404) the memory to determine a value for a sequence element parameter (208,226) that is stored in the memory, wherein the sequence element and the value are elements of a sequence;
validate (406) the sequence element using the sequence element and the value, and in response to said validation:
decrypt (412) the encrypted information using a cryptographic key (216) stored in the memory to obtain decrypted information;
update (414) the value associated with the sequence element parameter using the sequence element; and
output (416) programming information (110) to a programming module (104) for programming a programmable device (106) in communication with the programming module, said programming information based on said decrypted information, wherein the programmable device and the security data processing device are separate devices.

2. The security data processing device of claim 1, wherein the record further comprises an identifier (312), wherein the sequence element is associated with the identifier; and the processor is further configured to:
query the memory with said identifier to determine the value for the sequence element parameter that is stored in the memory in association with the identifier.

3. The security data processing device of claim 1 or 2, wherein said validation comprises determining if a position in the sequence of the sequence element is further in the sequence than a position in the sequence of the value.

4. The security data processing device of any preceding claim, wherein said programming information comprises said decrypted information.

5. The security data processing device of any preceding claim, wherein the processor is configured to process said decrypted information to generate processed decrypted information and output processed decrypted information to the programming module, optionally wherein the processor is further configured to process said decrypted information by performing one or more cryptographic operations using the decrypted information to generate said processed decrypted information.

6. The security data processing device of any preceding claim, wherein:
in response to determining that the position in the sequence of the sequence element is further in the sequence than the position in the sequence of the value, the processor is further configured to remove from the memory one or more of: any decrypted information associated with the value; and any encrypted information associated with the value; and
in response to determining that the position in the sequence of the sequence element is not further in the sequence than the position in the sequence of the value, the processor is configured to reject said record and not decrypt said encrypted information.

7. The security data processing device of any preceding claim, wherein the processor is further configured to:
receive, from a party associated with said record, a signed instruction to replace said value in memory with an earlier sequence element that has a position in the sequence earlier than said value;
verify the signed instruction using a signing key (214) stored in memory;
in response to verifying said signed instruction:
update the value associated with the sequence element parameter using the earlier sequence element.

8. The security data processing device of any of claims 1 to 6, wherein the processor is further configured to:
receive, from a party associated with said record, a signed instruction to validate a specified sequence element that has a position in the sequence that is not further in the sequence than a position in the sequence of the value;
verify the signed instruction using a signing key stored in memory;
in response to verifying said signed instruction:
validate said specified sequence element.

9. The security data processing device of any preceding claim, wherein the processor is configured to:
receive an instruction to reset the security data processing device;
generate a random number in response to said received instruction;
modify the cryptographic key using the random number to obtain a modified cryptographic key; and
replace the cryptographic key with the modified cryptographic key in the memory.

10. The security data processing device of any preceding claim, wherein either:
the sequence is a series of ascending numbers, and said validation comprises determining if the sequence element is greater than the value; or
the sequence is a series of descending numbers, and said validation comprises determining if the sequence element is less than the value.

11. The security data processing device of any of claims 1 to 9, wherein the sequence element is a hashed value, and the value for the sequence element parameter is an unhashed value, the processor is configured to hash the value for the sequence element parameter and validate the sequence element using the sequence element and the hashed value for the sequence element parameter.

12. The security data processing device of any preceding claim, wherein the record further comprises a security data processing device identifier (304) that identifies a security data processing device configured to receive the record from the programming module and the processor is further configured to:
validate the sequence element in response to determining that the security data processing device identifier matches a security data processing device identifier stored in the memory.

13. The security data processing device of any preceding claim, wherein the sequence element comprises a batch number and a device number, wherein the batch number corresponds to a batch of programmable devices to be programmed and the device number corresponds to a single device in the batch of programmable devices, preferably wherein said sequence element comprises said batch number appended by said device number.

14. A computer implemented method (400), the method implemented on a security data processing device (102), and comprising:
receiving (402) a record (108), the record comprising: a sequence element (302) and encrypted information (308);
querying (404) a memory (204) of the security data processing device to determine a value for a sequence element parameter (208,226) that is stored in the memory, wherein the sequence element and the value are elements of a sequence;
validating (406) the sequence element using the sequence element and the value, and in response to said validation:
decrypting (412) the encrypted information using a cryptographic key (216) stored in the memory to obtain decrypted information;
updating (414) the value associated with the sequence element parameter using the sequence element; and
outputting (416) programming information (110) to a programming module (104) for programming a programmable device (106) in communication with the programming module, said programming information based on said decrypted information, wherein the programmable device and the security data processing device are separate devices.

15. A computer-readable storage medium comprising instructions which, when executed by a processor (202) of a security data processing device (102), cause the security data processing device to:
receive (402) a record (108), the record comprising: a sequence element (302) and encrypted information (308);
query (404) a memory (204) of the security data processing device to determine a value for a sequence element parameter that is stored in the memory, wherein the sequence element and the value are elements of a sequence;
validate (406) the sequence element using the sequence element and the value, and in response to said validation:
decrypt (412) the encrypted information using a cryptographic key stored in the memory to obtain decrypted information;
update (414) the value associated with the sequence element parameter using the sequence element; and
output (416) programming information to a programming module (104) for programming a programmable device (106) in communication with the programming module, said programming information based on said decrypted information, wherein the programmable device and the security data processing device are separate devices.

## Patentansprüche

1. Sicherheitsdatenverarbeitungsvorrichtung (102), die einen Speicher (204) und einen Prozessor (202) umfasst, wobei der Prozessor mit dem Speicher gekoppelt ist und zu Folgendem konfiguriert ist:
Empfangen (402) eines Datensatzes (108), wobei der Datensatz Folgendes umfasst: ein Sequenzelement (302) und verschlüsselte Informationen (308);
Abfragen (404) des Speichers, um einen Wert für einen im Speicher gespeicherten Sequenzelementparameter (208, 226) zu bestimmen, wobei das Sequenzelement und der Wert Elemente einer Sequenz sind;
Validieren (406) des Sequenzelements unter Verwendung des Sequenzelements und des Wertes, und als Reaktion auf die Validierung:
Entschlüsseln (412) der verschlüsselten Informationen unter Verwendung eines im Speicher gespeicherten Kryptoschlüssels (216), um entschlüsselte Informationen zu erhalten;
Aktualisieren (414) des dem Sequenzelementparameter zugeordneten Wertes unter Verwendung des Sequenzelements; und
Ausgeben (416) von Programmierinformationen (110) an ein Programmiermodul (104) zum Programmieren einer mit dem Programmiermodul in Verbindung stehenden programmierbaren Vorrichtung (106), wobei die Programmierinformationen auf den entschlüsselten Informationen basieren, wobei die programmierbare Vorrichtung und die Sicherheitsdatenverarbeitungsvorrichtung separate Vorrichtungen sind.

2. Sicherheitsdatenverarbeitungsvorrichtung nach Anspruch 1, wobei der Datensatz ferner eine Kennung (312) umfasst, wobei das Sequenzelement der Kennung zugeordnet ist; und der Prozessor ferner zu Folgendem konfiguriert ist:
Abfragen des Speichers mit der Kennung, um den Wert für den Sequenzelementparameter zu bestimmen, der in Verbindung mit der Kennung im Speicher gespeichert ist.

3. Sicherheitsdatenverarbeitungsvorrichtung nach Anspruch 1 oder 2, wobei die Validierung das Bestimmen umfasst, ob eine Position des Sequenzelements in der Sequenz weiter in der Sequenz ist als eine Position des Wertes in der Sequenz.

4. Sicherheitsdatenverarbeitungsvorrichtung nach einem der vorhergehenden Ansprüche, wobei die Programmierinformationen die entschlüsselten Informationen umfassen.

5. Sicherheitsdatenverarbeitungsvorrichtung nach einem der vorhergehenden Ansprüche, wobei der Prozessor so konfiguriert ist, dass er die entschlüsselten Informationen verarbeitet, um verarbeitete entschlüsselte Informationen zu erzeugen und verarbeitete entschlüsselte Informationen an das Programmiermodul auszugeben, wobei der Prozessor optional ferner so konfiguriert ist, dass er die entschlüsselten Informationen verarbeitet, indem er einen oder mehrere Krypto-Vorgänge unter Verwendung der entschlüsselten Informationen durchführt, um die verarbeiteten entschlüsselten Informationen zu erzeugen.

6. Sicherheitsdatenverarbeitungsvorrichtung nach einem der vorhergehenden Ansprüche, wobei:
als Reaktion auf das Bestimmen, dass die Position des Sequenzelements in der Sequenz weiter in der Sequenz ist als die Position des Wertes in der Sequenz, der Prozessor ferner so konfiguriert ist, dass er eine oder mehrere von Folgendem aus dem Speicher entfernt: jegliche entschlüsselten Informationen, die dem Wert zugeordnet sind; und jegliche verschlüsselten Informationen, die dem Wert zugeordnet sind; und
als Reaktion auf das Bestimmen, dass die Position des Sequenzelements in der Sequenz nicht weiter in der Sequenz ist als die Position des Wertes in der Sequenz, der Prozessor so konfiguriert ist, dass er den Datensatz zurückweist und die verschlüsselten Informationen nicht entschlüsselt.

7. Sicherheitsdatenverarbeitungsvorrichtung nach einem der vorhergehenden Ansprüche, wobei der Prozessor ferner konfiguriert zu Folgendem ist:
Empfangen einer signierten Anweisung von einer dem Datensatz zugeordneten Instanz, den Wert im Speicher durch ein früheres Sequenzelement zu ersetzen, das eine frühere Position in der Sequenz aufweist als der Wert;
Verifizieren der signierten Anweisung unter Verwendung eines im Speicher gespeicherten Signierschlüssels (214);
als Reaktion auf das Verifizieren der signierten Anweisung:
Aktualisieren des dem Sequenzelementparameter zugeordneten Wertes unter Verwendung des früheren Sequenzelements.

8. Sicherheitsdatenverarbeitungsvorrichtung nach einem der Ansprüche 1 bis 6, wobei der Prozessor ferner konfiguriert zu Folgendem ist:
Empfangen einer signierten Anweisung von einer dem Datensatz zugeordneten Instanz, ein spezifiziertes Sequenzelement zu validieren, das eine Position in der Sequenz aufweist, die nicht weiter in der Sequenz ist als eine Position des Wertes in der Sequenz;
Verifizieren der signierten Anweisung unter Verwendung eines in Speicher gespeicherten Signierschlüssels;
als Reaktion auf das Verifizieren der signierten Anweisung:
Validieren des spezifizierten Sequenzelements.

9. Sicherheitsdatenverarbeitungsvorrichtung nach einem der vorhergehenden Ansprüche, wobei der Prozessor zu Folgendem konfiguriert ist:
Empfangen einer Anweisung zum Zurücksetzen der Sicherheitsdatenverarbeitungsvorrichtung;
Erzeugen einer Zufallszahl als Reaktion auf die empfangene Anweisung;
Modifizieren des Kryptoschlüssels unter Verwendung der Zufallszahl, um einen modifizierten Kryptoschlüssel zu erhalten; und
Ersetzen des Kryptoschlüssels durch den modifizierten Kryptoschlüssel im Speicher.

10. Sicherheitsdatenverarbeitungsvorrichtung nach einem der vorhergehenden Ansprüche, wobei entweder:
die Sequenz eine Reihe von aufsteigenden Zahlen ist, und die Validierung das Bestimmen umfasst, ob das Sequenzelement größer als der Wert ist; oder
die Sequenz eine Reihe von absteigenden Zahlen ist, und die Validierung das Bestimmen umfasst, ob das Sequenzelement kleiner als der Wert ist.

11. Sicherheitsdatenverarbeitungsvorrichtung nach einem der Ansprüche 1 bis 9, wobei das Sequenzelement ein gehashter Wert ist, und der Wert für den Sequenzelementparameter ein nicht gehashter Wert ist, wobei der Prozessor so konfiguriert ist, dass er den Wert für den Sequenzelementparameter hasht und das Sequenzelement unter Verwendung des Sequenzelements und des gehashten Wertes für den Sequenzelementparameter validiert.

12. Sicherheitsdatenverarbeitungsvorrichtung nach einem der vorhergehenden Ansprüche, wobei der Datensatz ferner eine Sicherheitsdatenverarbeitungsvorrichtung-Kennung (304) umfasst, die eine Sicherheitsdatenverarbeitungsvorrichtung identifiziert, welche dazu konfiguriert ist, den Datensatz vom Programmiermodul zu empfangen, und der Prozessor ferner zu Folgendem konfiguriert ist:
Validieren des Sequenzelements als Reaktion auf das Bestimmen, dass die Sicherheitsdatenverarbeitungsvorrichtung-Kennung mit einer im Speicher gespeicherten Sicherheitsdatenverarbeitungsvorrichtung-Kennung übereinstimmt.

13. Sicherheitsdatenverarbeitungsvorrichtung nach einem der vorhergehenden Ansprüche, wobei das Sequenzelement eine Batch-Nummer und eine Vorrichtungsnummer umfasst, wobei die Batch-Nummer einem Batch von zu programmierenden programmierbaren Vorrichtungen entspricht und die Vorrichtungsnummer einer einzelnen Vorrichtung in dem Batch von programmierbaren Vorrichtungen entspricht, wobei das Sequenzelement vorzugsweise die Batch-Nummer umfasst, an die die Vorrichtungsnummer angehängt ist.

14. Computerimplementiertes Verfahren (400), wobei das Verfahren auf einer Sicherheitsdatenverarbeitungsvorrichtung (102) implementiert ist und Folgendes umfasst:
Empfangen (402) eines Datensatzes (108), wobei der Datensatz Folgendes umfasst: ein Sequenzelement (302) und verschlüsselte Informationen (308);
Abfragen (404) eines Speichers (204) der Sicherheitsdatenverarbeitungsvorrichtung, um einen Wert für einen im Speicher gespeicherten Sequenzelementparameter (208, 226) zu bestimmen, wobei das Sequenzelement und der Wert Elemente einer Sequenz sind;
Validieren (406) des Sequenzelements unter Verwendung des Sequenzelements und des Wertes, und als Reaktion auf die Validierung:
Entschlüsseln (412) der verschlüsselten Informationen unter Verwendung eines im Speicher gespeicherten Kryptoschlüssels (216), um entschlüsselte Informationen zu erhalten;
Aktualisieren (414) des dem Sequenzelementparameter zugeordneten Wertes unter Verwendung des Sequenzelements; und
Ausgeben (416) von Programmierinformationen (110) an ein Programmiermodul (104) zum Programmieren einer mit dem Programmiermodul in Verbindung stehenden programmierbaren Vorrichtung (106), wobei die Programmierinformationen auf den entschlüsselten Informationen basieren, wobei die programmierbare Vorrichtung und die Sicherheitsdatenverarbeitungsvorrichtung separate Vorrichtungen sind.

15. Computerlesbares Speichermedium, das Anweisungen umfasst, die, wenn sie von einem Prozessor (202) einer Sicherheitsdatenverarbeitungsvorrichtung (102) ausgeführt werden, die Sicherheitsdatenverarbeitungsvorrichtung zu Folgendem veranlassen:
Empfangen (402) eines Datensatzes (108), wobei der Datensatz Folgendes umfasst: ein Sequenzelement (302) und verschlüsselte Informationen (308);
Abfragen (404) eines Speichers (204) der Sicherheitsdatenverarbeitungsvorrichtung, um einen Wert für einen im Speicher gespeicherten Sequenzelementparameter zu bestimmen, wobei das Sequenzelement und der Wert Elemente einer Sequenz sind;
Validieren (406) des Sequenzelements unter Verwendung des Sequenzelements und des Wertes, und als Reaktion auf die Validierung:
Entschlüsseln (412) der verschlüsselten Informationen unter Verwendung eines im Speicher gespeicherten Kryptoschlüssels, um entschlüsselte Informationen zu erhalten;
Aktualisieren (414) des dem Sequenzelementparameter zugeordneten Wertes unter Verwendung des Sequenzelements; und
Ausgeben (416) von Programmierinformationen an ein Programmiermodul (104) zum Programmieren einer mit dem Programmiermodul in Verbindung stehenden programmierbaren Vorrichtung (106), wobei die Programmierinformationen auf den entschlüsselten Informationen basieren, wobei die programmierbare Vorrichtung und die Sicherheitsdatenverarbeitungsvorrichtung separate Vorrichtungen sind.

## Revendications

1. Dispositif de traitement de données de sécurité (102) comprenant une mémoire (204) et un processeur (202), le processeur étant couplé à la mémoire et configuré pour :
recevoir (402) un enregistrement (108), l'enregistrement comprenant : un élément de séquence (302) et des informations chiffrées (308) ;
interroger (404) la mémoire pour déterminer une valeur relative à un paramètre d'élément de séquence (208, 226) qui est stocké dans la mémoire, l'élément de séquence et la valeur étant des éléments d'une séquence ;
valider (406) l'élément de séquence à l'aide de l'élément de séquence et la valeur, et en réponse à ladite validation :
déchiffrer (412) les informations chiffrées à l'aide d'une clé cryptographique (216) stockée dans la mémoire pour obtenir des informations déchiffrées ;
actualiser (414) la valeur associée au paramètre d'élément de séquence à l'aide de l'élément de séquence ; et
émettre en sortie (416) des informations de programmation (110) à un module de programmation (104) pour programmer un dispositif programmable (106) en communication avec le module de programmation, lesdites informations de programmation étant basées sur lesdites informations déchiffrées, le dispositif programmable et le dispositif de traitement de données de sécurité étant des dispositifs distincts.

2. Dispositif de traitement de données de sécurité selon la revendication 1, dans lequel l'enregistrement comprend en outre un identifiant (312), l'élément de séquence étant associé à l'identifiant ; et le processeur est en outre configuré pour :
interroger la mémoire avec ledit identifiant pour déterminer la valeur relative au paramètre d'élément de séquence qui est stocké dans la mémoire en association avec l'identifiant.

3. Dispositif de traitement de données de sécurité selon la revendication 1 ou 2, dans lequel ladite validation comprend la détermination du fait qu'une position de l'élément de séquence dans la séquence est ou n'est pas plus loin dans la séquence qu'une position de la valeur dans la séquence.

4. Dispositif de traitement de données de sécurité selon l'une quelconque des revendications précédentes, dans lequel lesdites informations de programmation comprennent lesdites informations déchiffrées.

5. Dispositif de traitement de données de sécurité selon l'une quelconque des revendications précédentes, dans lequel le processeur est configuré pour traiter lesdites informations déchiffrées pour générer des informations déchiffrées traitées et émettre en sortie des informations déchiffrées traitées au module de programmation, facultativement dans lequel le processeur est en outre configuré pour traiter lesdites informations déchiffrées en effectuant une ou plusieurs opérations cryptographiques à l'aide des informations déchiffrées pour générer lesdites informations déchiffrées traitées.

6. Dispositif de traitement de données de sécurité selon l'une quelconque des revendications précédentes, dans lequel :
en réponse à la détermination du fait que la position de l'élément de séquence dans la séquence est plus loin dans la séquence que la position de la valeur dans la séquence, le processeur est en outre configuré pour supprimer de la mémoire un ou plusieurs éléments parmi : toute information déchiffrée associée à la valeur ; et toute information chiffrée associée à la valeur ; et
en réponse à la détermination du fait que la position de l'élément de séquence dans la séquence n'est pas plus loin dans la séquence que la position de la valeur dans la séquence, le processeur est configuré pour rejeter ledit enregistrement et ne pas déchiffrer lesdites informations chiffrées.

7. Dispositif de traitement de données de sécurité selon l'une quelconque des revendications précédentes, dans lequel le processeur est en outre configuré pour :
recevoir, en provenance d'une partie prenante associée audit enregistrement, une instruction signée visant au remplacement de ladite valeur en mémoire par un élément de séquence antérieur, dont la position dans la séquence est antérieure à ladite valeur ;
vérifier l'instruction signée à l'aide d'une clé de signature (214) stockée en mémoire ;
en réponse à la vérification de ladite instruction signée :
actualiser la valeur associée au paramètre d'élément de séquence à l'aide de l'élément de séquence antérieur.

8. Dispositif de traitement de données de sécurité selon l'une quelconque des revendications 1 à 6, dans lequel le processeur est en outre configuré pour :
recevoir, en provenance d'une partie prenante associée audit enregistrement, une instruction signée visant à la validation d'un élément de séquence spécifié, dont la position dans la séquence n'est pas plus loin dans la séquence qu'une position de la valeur dans la séquence ;
vérifier l'instruction signée à l'aide d'une clé de signature stockée en mémoire ;
en réponse à la vérification de ladite instruction signée :
valider ledit élément de séquence spécifié.

9. Dispositif de traitement de données de sécurité selon l'une quelconque des revendications précédentes, dans lequel le processeur est configuré pour :
recevoir une instruction visant à la réinitialisation du dispositif de traitement de données de sécurité ;
générer un nombre aléatoire en réponse à ladite instruction reçue ;
modifier la clé cryptographique à l'aide du nombre aléatoire pour obtenir une clé cryptographique modifiée ; et
remplacer la clé cryptographique par la clé cryptographique modifiée dans la mémoire.

10. Dispositif de traitement de données de sécurité selon l'une quelconque des revendications précédentes, dans lequel soit :
la séquence est une série de nombres croissants, et ladite validation comprend la détermination du fait que l'élément de séquence est ou n'est pas supérieur à la valeur, soit
la séquence est une série de nombres décroissants, et ladite validation comprend la détermination du fait que l'élément de séquence est ou n'est pas inférieur à la valeur.

11. Dispositif de traitement de données de sécurité selon l'une quelconque des revendications 1 à 9, dans lequel l'élément de séquence est une valeur hachée, et la valeur relative au paramètre d'élément de séquence est une valeur non hachée, le processeur est configuré pour hacher la valeur relative au paramètre d'élément de séquence et valider l'élément de séquence à l'aide de l'élément de séquence et la valeur hachée relative au paramètre d'élément de séquence.

12. Dispositif de traitement de données de sécurité selon l'une quelconque des revendications précédentes, dans lequel l'enregistrement comprend en outre un identifiant de dispositif de traitement de données de sécurité (304) qui identifie un dispositif de traitement de données de sécurité configuré pour recevoir l'enregistrement en provenance du module de programmation, et le processeur est en outre configuré pour :
valider l'élément de séquence en réponse à la détermination du fait que l'identifiant de dispositif de traitement de données de sécurité concorde avec un identifiant de dispositif de traitement de données de sécurité stocké dans la mémoire.

13. Dispositif de traitement de données de sécurité selon l'une quelconque des revendications précédentes, dans lequel l'élément de séquence comprend un numéro de lot et un numéro de dispositif, le numéro de lot correspondant à un lot de dispositifs programmables à programmer et le numéro de dispositif correspondant à un dispositif particulier du lot de dispositifs programmables, ledit élément de séquence comprenant de préférence ledit numéro de lot suivi dudit numéro de dispositif.

14. Procédé mis en œuvre par ordinateur (400), le procédé étant mis en œuvre sur un dispositif de traitement de données de sécurité (102) et comprenant les étapes consistant à :
recevoir (402) un enregistrement (108), l'enregistrement comprenant : un élément de séquence (302) et des informations chiffrées (308) ;
interroger (404) une mémoire (204) du dispositif de traitement de données de sécurité pour déterminer une valeur relative à un paramètre d'élément de séquence (208, 226) qui est stocké dans la mémoire, l'élément de séquence et la valeur étant des éléments d'une séquence ;
valider (406) l'élément de séquence à l'aide de l'élément de séquence et la valeur, et en réponse à ladite validation :
déchiffrer (412) les informations chiffrées à l'aide d'une clé cryptographique (216) stockée dans la mémoire pour obtenir des informations déchiffrées ;
actualiser (414) la valeur associée au paramètre d'élément de séquence à l'aide de l'élément de séquence ; et
émettre en sortie (416) des informations de programmation (110) à un module de programmation (104) pour programmer un dispositif programmable (106) en communication avec le module de programmation, lesdites informations de programmation étant basées sur lesdites informations déchiffrées, le dispositif programmable et le dispositif de traitement de données de sécurité étant des dispositifs distincts.

15. Support de stockage lisible par ordinateur comprenant des instructions qui, lorsqu'elles sont exécutées par un processeur (202) d'un dispositif de traitement de données de sécurité (102), amènent le dispositif de traitement de données de sécurité à :
recevoir (402) un enregistrement (108), l'enregistrement comprenant : un élément de séquence (302) et des informations chiffrées (308) ;
interroger (404) une mémoire (204) du dispositif de traitement de données de sécurité pour déterminer une valeur relative à un paramètre d'élément de séquence qui est stocké dans la mémoire, l'élément de séquence et la valeur étant des éléments d'une séquence ;
valider (406) l'élément de séquence à l'aide de l'élément de séquence et la valeur, et en réponse à ladite validation :
déchiffrer (412) les informations chiffrées à l'aide d'une clé cryptographique stockée dans la mémoire pour obtenir des informations déchiffrées ;
actualiser (414) la valeur associée au paramètre d'élément de séquence à l'aide de l'élément de séquence ; et
émettre en sortie (416) des informations de programmation à un module de programmation (104) pour programmer un dispositif programmable (106) en communication avec le module de programmation, lesdites informations de programmation étant basées sur lesdites informations déchiffrées, le dispositif programmable et le dispositif de traitement de données de sécurité étant des dispositifs distincts.
